# EUROPÄISCHE PATENTSCHRIFT

(11) **EP 2 092 201 B1**
(45) Veröffentlichungstag und Bekanntmachung des Hinweises auf die Patenterteilung: **19.06.2013**
(21) Anmeldenummer: 07817702.9
(22) Anmeldetag: 19.10.2007
(51) Int. Cl.: F16B 13/00, F16B 13/08, F16B 13/12, F16B 13/14

(54) **DÜBEL FÜR DECKPLATTENHINTERGRIFF**
ANCHOR FOR ENGAGING BEHIND COVER PANELS
CHEVILLE À INSERTION ARRIÈRE DANS UNE PLAQUE DE RECOUVREMENT

(30) Priorität: 19.10.2006 DE 102006049953
(43) Veröffentlichungstag der Anmeldung: 26.08.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/001867
(87) Internationale Veröffentlichungsnummer: WO 2008/046412

(56) Entgegenhaltungen:
- EP-A- 1 116 831
- EP-A- 1 277 971
- DE-U1- 20 002 016

## Beschreibung

Die Erfindung betrifft einen Dübel zur Befestigung an - in Stützkernbauweise gefertigten - flächigen Bauteilen mit einer ersten und einer zweiten Deckplatte und mindestens einer Stützkernzwischenlage, wobei der Dübel mindestens einen Spreizkörper und mindestens einen Keilkörper umfasst, wobei der Keilkörper in den Spreizkörper zumindest bereichsweise einsteckbar ist und wobei der Keilkörper oder der Spreizkörper eine Ausnehmung zum Einschrauben oder Einschlagen eines Befestigungsmittels hat.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. Polyurethan-Schaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift

DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ein anderer Dübel, der diesen Nachteil vermeidet, ist aus dem Internetkatalog (September 2006) des Unternehmens Fischer Befestigungssysteme GmbH bekannt. Er wird dort unter der Bezeichnung SLM-N geführt. Der Dübel hat einen rohrförmigen Spreizkörper, in dessen Bohrung ein zumindest bereichsweise kegelstumpfförmiger Keilkörper am hinteren, geschlitzten Spreizkörperende eingesteckt ist. Der Keilkörper hat eine zentrale Bohrung mit Innengewinde. Wird der Keilkörper zum Beispiel durch das Anziehen einer im Gewinde des Keilkörpers sitzenden Halteschraube in den Spreizkörper hineinbewegt, spreizt sich dieser unter Festklemmen im unteren Bereich der Bohrung. Allerdings würde dieser Dübel nur in einem sehr formsteifen Kernmaterial fest sitzen.

Aus der EP 1 116 831 A1 ist ein zweiteiliger Dübel für Bohrlöcher mit Hinterschneidung bekannt. In einer unten geschlitzten Dübelhülse steckt ein Keilbolzen. Im Bereich der Schlitze ist die Bohrung der Dübelhülse konisch verengt. Wird der Keilbolzen in die Verengung der Dübelhülse eingetrieben, spreizt sich das hintere Ende der Dübelhülse, um sich in der Bohrlochhinterschneidung zu verklemmen.

Aus der EP 1 277 971 A1 ist ein Dübel für Hohlkammerprofile bekannt, der aus einer spreizhülse und einem Spreizkonus besteht. Die Spreizhülse wird mit Hilfe einer Schraube, die auch die vom Dübel zu haltende Last trägt, im Hohlkammerprofil befestigt. Die Spreizhülse und der Spreizkonus haben jeweils keine verrastungszone.

Aus der DE 200 02 016 U1 ist ein verbunddübel bekannt, der aus einer Außenhülse, einer Innenhülse mit Flansch und einer Klebepatrone besteht. Letztere sitzt in der Innenhülse. Die Hülse weisen Durchbrüche auf. Durch das Eindrücken einer Schraube reißt die Klebepatröne auf und verklebt die Schraube mit den Hülsen und der Wandung der dübeltragenden wand.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen.

Das Problem wird mit den Merkmalen der Ansprüche 1 und 8 gelöst. Dazu ist nach Anspruch 1 der Dübel in die Ausnehmung des flächigen Bauteils einsetzbar. Der Spreizkörper hat mindestens zwei spreizbare Hintergriffselemente und mindestens eine Verrastungszone. Der Keilkörper weist mindestens eine Zylinderzone, mindestens eine Keilzone und mindestens eine Verrastungszone auf. Die Zylinderzone ist in der Bohrung der ersten Deckplatte anlegbar. Die Hintergriffselemente des Spreizkörpers sind durch die Keilzone hinter der ersten Deckplatte - an dieser anliegend- aufspreizbar. Die Verrastungszonen sind miteinander verrastet. Das Ende des Spreizkörpers ist an der zweiten Deckplatte anlegbar.

Nach Anspruch 8 ist der Dübel in die Ausnehmung des flächigen Bauteils einsetzbar. Der Spreizkörper hat mindestens zwei spreizbare Hintergriffselemente und mindestens eine Verrastungszone. Der Spreizkörper hat eine Kammer mit eingelegter - mindestens einen Klebstoff enthaltenden - Klebstoffpatrone und bodenseitiger Austrittsausnehmung. Der Keilkörper weist mindestens eine Zylinderzone, mindestens eine Keilzone und mindestens eine Verrastungszone auf. Die Zylinderzone ist in der Bohrung der ersten Deckplatte anlegbar. Die Hintergriffselemente des spreizkörpers sind durch die Keilzone hinter der ersten Deckplatte - an dieser anliegend - aufspreizbar. Die Verrastungszonen sind miteinander verrastet. Das Ende des Spreizkörpers ist an der zweiten Deckplatte anlegbar. Der Klebstoff der geöffneten Klebstoffpatrone ist in der Montagefuge zwischen der unteren Deckplatte und dem bodenseitigen Ende des Spreizkörpers verteilbar.

Mit der vorliegenden Erfindung wird ein Dübel für Leichtbauplatten geschaffen, der bei hoher Auszugskraft sowohl manuell als auch maschinell schnell und sicher gesetzt werden kann.

Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines gespreizten Dübels;
- Figur 2:: Ungespreizter Spreizkörper zu Figur 1;
- Figur 3:: Keilkörper zu Figur 1;
- Figur 4:: In Leichtbauplatte eingesteckter Spreizkörper;
- Figur 5:: Montierter Dübel zum Spreizkörper nach Figur 4;
- Figur 6:: Spreizkörper mit Verrutschsicherung;
- Figur 7:: Montierter Dübel zum Spreizkörper nach Figur 6;
- Figur 8:: wie Figur 1, jedoch mit anderem Längsschlitz und teilweise eingestecktem Keilkörper;
- Figur 9:: Vergrößerung von Detail aus Figur 5.
- Figur 10:: Teilansicht der Kombination von Keilkörper und Spreizkörper mit Stützstegen;
- Figur 11:: wie Figur 10, jedoch mit eingeschobenem Keilkörper;
- Figur 12:: wie Figur 4, jedoch mit zweiter Spreizung;
- Figur 13:: Montierter Dübel zum Spreizkörper nach Figur 12;
- Figur 14:: Dübel mit anderer Einschraubmöglichkeit;
- Figur 15:: Dübel ohne Verrastung;
- Figur 16:: Querschnitt durch einen unverformten Dübel mit Exzenterspreizung;
- Figur 17:: Querschnitt durch einen verformten Dübel mit Exzenterspreizung.

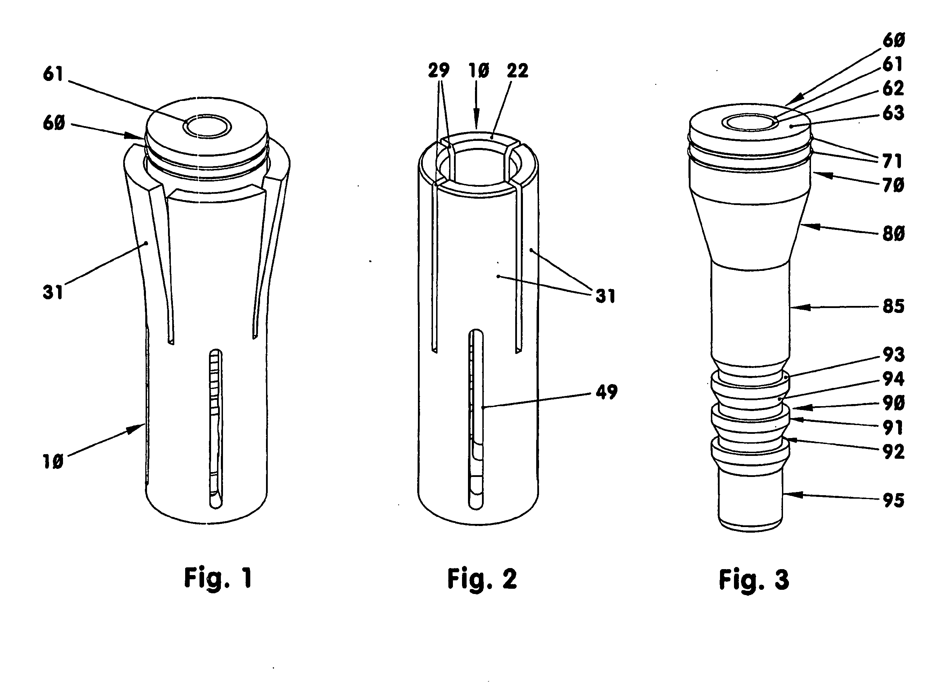

Die Figur 1 zeigt einen gespreizten Dübel in der Gestalt, wie er sie nach dem Einbau in einer Leichtbauplatte hätte. Der Dübel hat hier nur zwei Teile, einen Spreizkörper (10) und einen Keilkörper (60). Beide Teile (10, 60) sind in den Figuren 2 und 3 separat dargestellt. Der Dübel nach Figur 1 hat beispielsweise eine Länge von 35 Millimetern. Das zum Setzen des Dübels gebohrte Loch hat z.B. einen Durchmesser von 8,5 Millimetern. Der Durchmesser des unverformten Dübels ist bei dieser Konstruktion entweder maximal um den Faktor drei größer als der Kerndurchmesser der mit dem Dübel in der Leichtbauplatte zu befestigende Schraube oder maximal um den Faktor 2,3 größer als der Nenndurchmesser der in den Dübel eingeschraubten Schraube.

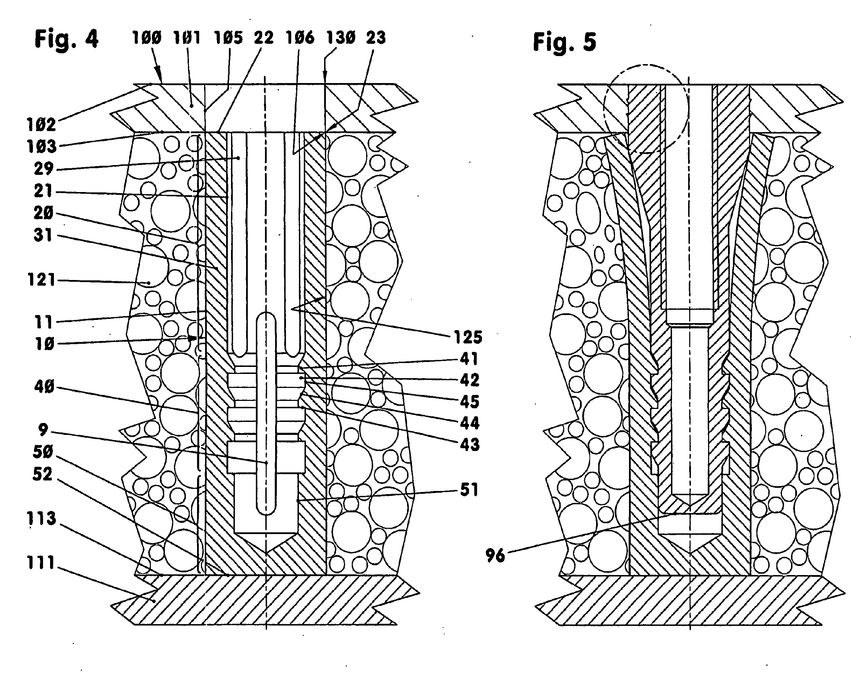

Der Dübel dient z.B. der Beschlagsbefestigung in Leichtbauplatten (100) ohne Riegel und festen Einlagen, vgl. Figur 4. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat eine Wandstärke von 37,5 Millimetern. Jede Deckplatte ist hier vier Millimeter dick. Statt des Schaumkerns kann sie u.a. auch einen Wabenkern haben.

Die Leichtbauplatte (100) kann auch gewölbt, z.B. zylindrisch oder sphärisch, ausgeführt sein, sofern die Materialstärke des Stützkerns (121) zumindest annähernd konstant ist.

Nach Figur 4 hat der Spreizkörper (10) im Wesentlichen die Form eines Topfes, d.h. er ist ein rohrförmiger Körper mit einem Boden (52). Der Spreizkörper (10) ist in drei Bereiche aufgeteilt: einen Hintergriffsabschnitt (20), eine Verrastungszone (40) und ein Fußabschnitt (50).

Nach den Figuren 2 und 4 ist der obere, z.B. zylinderrohrförmige Bereich des Spreizkörpers (10) mit z.B. vier geraden Längsschlitzen (29) versehen. Die Schlitze (29) können auch wendelförmig gekrümmt sein. Sie separieren vier Hintergriffselemente (31). Die Länge der Längsschlitze (29) beträgt beispielsweise 40 bis 60% der Spreizkörpergesamtlänge. Ihre Breite beträgt im Ausführungsbeispiel 0,5 Millimeter und ist beim unverformten Dübel z.B. über die gesamte Länge konstant. Die Längsschlitze (29) haben eine 90°-Teilung. Ggf. sind die Längsschlitze (29) spiralförmig gewunden. Zur Kerbentlastung können die Längsschlitze (29) auch in radial angeordneten Entlastungsbohrungen enden.

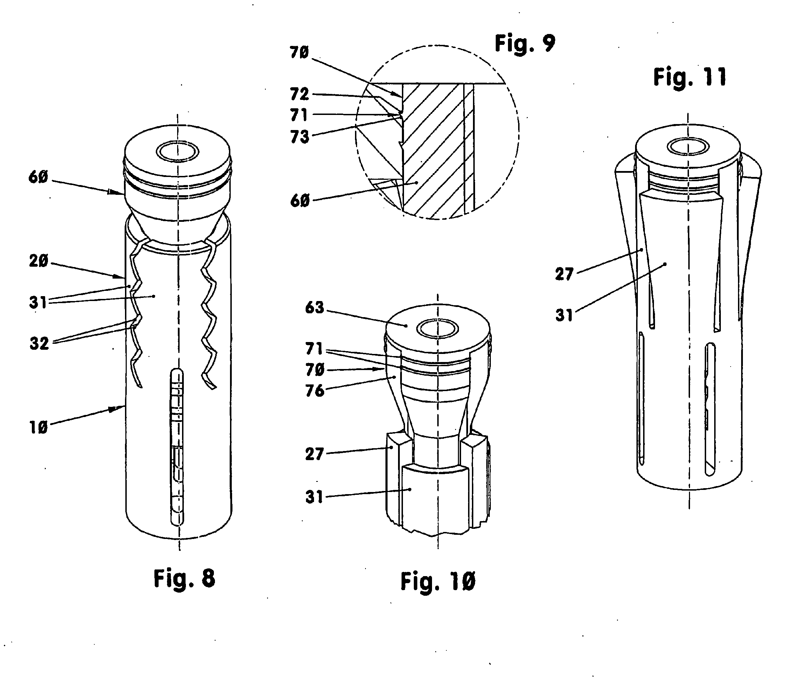

In Figur 8 ist ein Spreizkörper (10) gezeigt, der nur beispielhaft einen zick-zack-, mäander- oder zinnenförmigen Längsschlitz (29) hat. Bei einem unbeabsichtigten Verdrehen des eingebauten Dübels im Bereich des Stützkerns (121) - durch das Eindrehen einer nicht dargestellten Schraube in den Dübel - kontaktieren sich abstützend ein Teil der Hintergriffsflankenabschnitte (32) der benachbarten Hintergriffselemente (31) gegenseitig.

Im Bereich der Hintergriffselemente (31) ist die Innenwandung (21) des Spreizkörpers (10) zylindrisch geformt.

Der Spreizkörper (10) hat am oberen Ende des Hintergriffsabschnitts (31) eine Stirnfläche (22), die hier eben ausgeführt ist. Ggf. kann sie auch die Form eines flachen Kegelstumpfmantels haben, dessen fiktive Spitze auf der Mittellinie (9) des Dübels oberhalb oder unterhalb des oberen Spreizkörperendes liegt. In einem solchen Fall ist als Kegelwinkel z.B. ein Winkel von 156 Winkelgraden vorgesehen.

Da der Spreizkörper (10) eine Länge hat, die gleich oder geringfügig kleiner ist als der kürzeste Abstand zwischen den Deckplatten (101, 111), liegt die Stirnfläche (22) im Rahmen der üblichen Toleranzen in der Ebene der innenliegenden Oberfläche (103) der oberen Deckplatte (101). Nach Figur 4 liegt die Außenkante .(23) der Stirnfläche (22) gegenüber der innenliegenden Kante (106) der Bohrung (105). Die Stirnfläche (22) ist beispielsweise an ihrer Innen- und Außenkante angefast oder abgerundet, vgl. Figur 2.

Unterhalb der Hintergriffselemente (31) liegt eine Verrastungszone (40). Letztere besteht beispielsweise aus drei Raststollen (41) und drei Rastkerben (42), die jeweils wechselweise hintereinander angeordnet sind. Der einzelne, ringförmige und mehrmals unterbrochene Raststollen (41) hat im Einzelquerschnitt ein Sägezahnprofil. Die Raststollenteilung beträgt ca. ein Viertel des Spreizkörperdurchmessers.

Der einzelne Raststollen (41) hat eine Gleitflanke (44) und eine Rastflanke (43). Die Rastflanke (43), die nach den Figuren 4 bis 7 immer unterhalb der Gleitflanke (44) des gleichen Raststollens (41) liegt, ist Teil einer Ebene, die normal zur Mittellinie (9) orientiert ist. Die Gleitflanke (44) hat die Form eines Kegelstumpfmantels. Der Kegelwinkel des Mantels beträgt z.B. 60 Winkelgrade, wobei die gedachte Spitze, sie liegt auf der Mittellinie (9), immer unterhalb der Rastflanke (43) desselben Raststollens (41) liegt.

Der Nutgrund (45) der Rastkerben (42) hat einen Durchmesser, der dem Durchmesser der zylindrischen Innenwandung (21) des Hintergriffsabschnitts (20) entspricht.

Im Bereich der Verrastungszone (40) befinden sich hier vier Entlastungsschlitze (49), die parallel zur Dübelmittellinie (9) orientiert sind. Sie sind jeweils gegenüber den Längsschlitzen (29) um 45 Winkelgrade versetzt angeordnet. Die an ihren Enden ausgerundeten Entlastungsschlitze (49) können nach oben und nach unten ggf. 0,1 bis 3 Millimeter über die Verrastungszone überstehen. Die Breite der Entlastungsschlitze (49) ist doppelt so groß, wie die Breite der Längsschlitze (29). Im Ausführungsbeispiel beträgt sie ein Millimeter.

An die Verrastungszone (40) schließt sich nach unten hin der zylindrische Fußabschnitt (50) an. Seine Außenkontur, die eine zentrale Sacklochbohrung (51) umgibt, endet mit dem Boden (52). Die Sacklochbohrung (51) hat einen Durchmesser, der dem minimalen Durchmesser der Raststollen (41) entspricht.

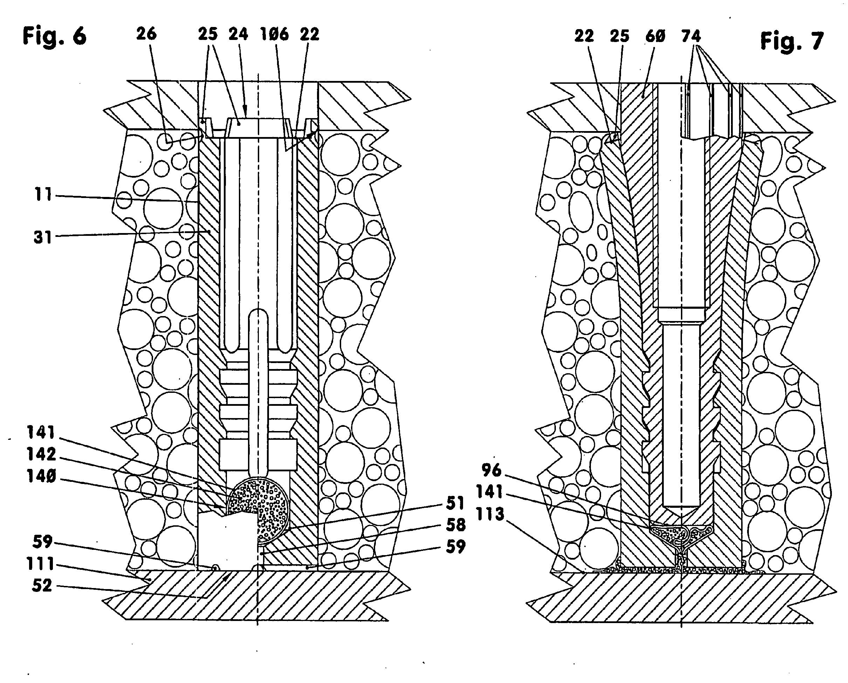

Der Spreizkörper (10) sitzt mit der Unterseite seines Bodens (52) direkt auf der innenliegenden Oberfläche (113) der zweiten bzw. unteren Deckplatte (111) auf. Dazu kann der Boden (52) auch konkav gewölbt sein oder eine Struktur aufweisen, so dass er nur mittels Linienberührung, punktuell oder partiell die Oberfläche (113) berührt. Selbstverständlich kann der Boden (52) auch weggelassen werden, sofern eine Detaillösung nach den Figuren 6 und 7 nicht verwendet wird, siehe unten.

In Figur 3 ist ein Keilkörper (60) dargestellt, vgl. auch Figuren 5 und 7. Die gezeigten Keilkörper (60) sind zumindest bereichsweise rotationssymmetrische Bauteile. Sie haben hier vier Abschnitte: einen Sitzabschnitt als Zylinderzone (70), einen Spreizabschnitt als Keilzone (80), ggf. ein Zwischenabschnitt (85), eine Verrastungszone (90) und einen Fußabschnitt (95).

Der Keilkörper (60) hat eine zentrale Bohrung (61) mit beispielsweise einem metrischen Innengewinde (62). Alternativ kann die Bohrung (61) zur Aufnahme von nichtmetrischen Schrauben, z.B. Spanplattenschrauben oder Holzschrauben, einen rechteckigen, ovalen, polygonförmigen oder sternförmigen Querschnitt haben. Ggf. verjüngt sich der Ausnehmungsquerschnitt von Bohrungsbeginn zum Bohrungsende hin.

Der Sitzabschnitt (70) des Keilkörpers (60) hat eine im Wesentlichen zylindrische Außenkontur, vgl. Figur 3. Dieser Abschnitt (70) sitzt bei einem in der Leichtbauplatte (100) montierten Dübel in der Bohrung (105) der oberen Deckplatte (101) ggf. mit einer Presspassung. Nach den Figuren 5 und 7 ragt ein Viertel bis ein Drittel der Länge des Sitzabschnitts (70) zusätzlich in den Bereich des Stützkerns (121) hinein. Der rein zylindrische Bereich des Sitzabschnitts (70), die Zylinderzone, hat hier einen Außendurchmesser, der dem Innendurchmesser der Bohrung (105) entspricht. In Figur 3 hat der Sitzabschnitt (70) zwei umlaufende Widerhakenstege (71). Die geschlossenen, ringförmigen Stege (71) haben einen dreieckigen Einzelquerschnitt, vgl. Figur 5 und 9, mit einer Stützflanke (72) und einer Rutschflanke (73). Sie stehen z.B. 0,15 Millimeter über die dortige zylindrische Außenkontur über. Sie bewirken u.a. ein verdrehsicherndes Verklemmen des Keilkörpers (60) in der Bohrung (105). Zusätzlich dichten sie die Montagefuge zwischen dem Keilkörper (60) und der Leichtbauplatte (100), so dass dort weder Schmutz noch Feuchtigkeit eindringen kann. Auch kann auf diese Weise kein Stützkernmaterial in die Umgebung gelangen.

Alternativ hierzu kann der Sitzabschnitt (70) auch eine Vielzahl von Längsstegen (74) aufweisen, vgl. Figur 7. Hier hat er 15 Längsstege (74). Alle Stege (74) verlaufen parallel zur Mittellinie (9) des Dübels. Auch hier hat jeder Steg (74) einen dreieckigen Querschnitt, wobei seine Flanken z.B. einen 90°-Winkel einschließen. Ggf. nimmt der Querschnitt der Stege (74) von oben nach unten zu. Dies erhöht die Dichtigkeit der Montagefuge.

An den Sitzabschnitt (70) schließt sich der Spreizabschnitt (80) bzw. die Keilzone an. Letztere besteht aus einem Kegelstumpf, dessen fiktive Spitze in der darunter liegenden Zone (85) oder (90) auf der Mittellinie (9) angeordnet ist. Der Spitzenwinkel liegt zwischen 30 und 45 Winkelgraden. Im Ausführungsbeispiel beträgt er 33,4°. Der minimale Außendurchmesser der Keilzone (80) entspricht dem Innendurchmesser des unverformten Hintergriffsabschnitts (20) des Spreizkörpers (10).

Im Ausführungsbeispiel folgt auf den Spreizabschnitt (80) der zylindrische Zwischenabschnitt (85) und die Verrastungszone (90). Mindestens das der Verrastungszone (90) zugewandte Ende des Zwischenabschnitts (85) hat als Außendurchmesser den Innendurchmesser des unverformten Hintergriffsabschnitts (20). Unabhängig von den Darstellungen der Figuren 1 bis 10 kann die Keilzone (80) und der Zwischenabschnitt (85) zu einem rotationssymmetrischen Spreizabschnitt zusammengefasst werden, wobei sich die Querschnitte dieses neuen Spreizabschnittes kontinuierlich und stetig von der Verrastungszone (90) zur Zylinderzone (70) zumindest bereichsweise nichtlinear vergrößern, vgl. Figur 7. Dort liegen die Hintergriffselemente (31) zumindest bereichsweise am Keilkörper (60) an.

Die Verrastungszone (90) des Keilkörpers (60) hat einen vergleichbaren Aufbau wie die Verrastungszone (40) des Spreizkörpers (10). Von oben nach unten folgt dreimal ein Raststollen (91) einer Rastnut (92), vgl. Figur 3. Die Teilung und die Profilform sind aus der zuvor beschriebenen Verrastungszone (40) bekannt. Auch hier haben die Raststollen (91) jeweils eine ebene Stützflanke (93). Allerdings liegt sie pro Raststollen (91) oberhalb der dortigen Gleitflanke (94).

Nach den gezeigten Figuren erfolgt die Verrastung ausschließlich in der separaten Verrastungszone (40, 90). Es ist jedoch auch möglich, die Verrastungszone teilweise oder vollständig z.B. in die Keilzone (80) bzw. in den Bereich der Hintergriffselemente (31) zu verlegen.

Der Verrastungszone (90) folgt ein zylindrischer Fußabschnitt (95). Er schließt mit einem Boden (96) ab, vgl. Figur 5. Der Außendurchmesser des Fußabschnittes (95) entspricht dem minimalen Nutgrunddurchmesser der Rastnuten (92).

Der Spreizkörper (10) und der Keilkörper (60) sind z.B. aus einem Polyamid gefertigt.

Um den Dübel montieren zu können wird die erste Deckplatte (101) durchbohrt und der Stützkörper (121) aufgebohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Das Bohrwerkzeug entfernt den Stützkörper (121) auf voller Länge. Die zweite Deckplatte (111) wird hierbei in der Regel nicht verletzt bzw. angebohrt. Sie wird nur im Bereich des Ausnehmungsgrundes vom Stützkernmaterial und vom Klebstoff weitgehend befreit.

Die entstandene Ausnehmung, bzw. Bohrung (130), die sich aus den Bohrungen bzw. Bohrungsabschnitten (105) und (125) zusammensetzt, wird beispielsweise mit Pressluft freigeblasen oder leergesaugt.

In die leere Bohrung (130) wird der Spreizkörper (10) in voller Länge eingesteckt, so dass er zum einen an der innenliegenden Oberfläche (113) der zweiten Deckplatte (111) ansteht und zum anderen mit seiner Stirnfläche (22) auf der Höhe der innenliegenden Oberfläche (103) der ersten Deckplatte (101) abschließt. Der Spreizkörper (10) sitzt z.B. bei Schaumkernen mit geringem Spiel im Bohrungsabschnitt (125).

Beim Einsetzen des Keilkörpers (60) in die Bohrung (21, 51) des Spreizkörpers (10) drückt die Keilzone (80) des Keilkörpers (60) die Hintergriffselemente (31) des Spreizkörpers (10) elastisch auseinander, so dass diese hintergreifend unter die innenliegende Oberfläche (103) der ersten Deckplatte (101) geschoben werden. Die Stirnfläche (22) kann dabei so konstruiert werden, dass sie vollflächig an der Oberfläche (103) zur Anlage kommt. Gleichzeitig wird die Zylinderzone (70) des Keilkörpers (60) in den Bohrungsabschnitt (105) eingepresst. Die Zylinderzone (70) sitzt mit radialer Restspannkraft im Bohrungsabschnitt (105) und schließt zumindest annähernd bündig mit der außenliegenden Oberfläche (102) der ersten Deckplatte (101) ab. Ggf. ist die obere, ebene Stirnfläche (63) des Keilkörpers (60) ein bis drei Zehntel Millimeter unterhalb der außenliegenden Oberfläche (102) der Deckplatte (101) angeordnet.

Am Ende der Spreizbewegung der Hintergriffselemente (31) verrasten die Raststollen (91) des Keilkörpers (60) in den Rastkerben (42) des Spreizkörpers (10) unlösbar. Während der drei dabei entstandenen Rastsprünge hat sich der Spreizkörper (10) jeweils kurzzeitig tonnenförmig aufgedehnt. Die Entlastungsschlitze (49) des Spreizkörpers (10) haben sich dazu temporär elastisch aufgeweitet. Nach Abschluss des Rastvorganges nimmt der Spreizkörper (10) im Bereich der Verrastungszone (40) wieder seine zylindrische Kontur (11) an. Ein z.B. zu montierender Beschlag kann nun mit einer Schraube in der Bohrung (61) des Keilkörpers (60) befestigt werden.

Das Gewinde (62) der Bohrung (61) endet in den Ausführungsbeispielen kurz vor der Verrastungszone (90).

In den Ausführungsbeispielen ist der Keilkörper bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. in der Verrastungszone über ein Gewinde verbunden sein, so dass der Keilkörper (60) nicht in einer linearen, nichtrotierenden Rastbewegung, sondern über eine Einschraubbewegung montiert wird.

Die Figuren 6 und 7 zeigen zwei weitere Detaillösungen. Die erste Detaillösung befasst sich mit dem Problem, das sich bei einem Einbau des Dübel's in eine Wabenplatte ergeben kann. Dort besteht nach dem Bohren der Bohrung (130) die Gefahr, dass der Spreizkörper (10) nach dem Einschieben in den Stützkernbereich, sich seitlich verlagert, bevor der Keilkörper (60) zentrierend in den Spreizkörper (10) eingedrückt wird.

Zum Verhindern eines seitlichen Verrutschens hat die obere Stirnfläche des Spreizkörpers (10) eine andere Gestalt bekommen. Auf der Stirnfläche (22) ist ein zinnenartiger, dünnwandiger Rand (24) aus Randsegmenten (25) angeformt, der die Außenkontur (11) des Spreizkörpers (10) so weit verlängert, dass die Außenkante (23) des Randes (24) nach Figur 6 oberhalb der innenliegenden Oberfläche (103) der Deckplatte (101) liegt. Jedes Hintergriffselement (31) trägt somit mindestens ein Randsegment (25). Die Randsegmente (25) sind seitlich abgeschrägt.

Im Übergangsbereich zwischen den Hintergriffselementen (31) und den Randsegmenten (25) hat die Außenkontur (11) eine umlaufende - durch die Längsschlitze - unterbrochene Einkerbung (26) zur jeweiligen Ausgestaltung eines Filmgelenks. Nach Figur 6 liegt die vertikale Mitte der Einkerbung (26) geringfügig unterhalb der Ebene der innenliegenden Oberfläche (103) der Deckplatte (101).

Wird nun der Keilkörper (60) in den Spreizkörper (10) eingetrieben, werden die Hintergriffselemente (31) nach außen gedrückt, wodurch die Randsegmente (25) - durch die Anlage an der Bohrungskante (106) - an den Filmgelenken abknicken und sich auf die Stirnfläche (22) falten, vgl. Figur 7. Zusammen mit den gefalteten Randsegmenten (25) hat der Spreizkörper (10) nun die erforderliche Länge um zwischen die Deckplatten (101, 111) zu passen.

Das seitliche Verrutschen des Spreizkörpers (10) in der Leichtbauplatte (100) kann auch durch Stützstege (27) verhindert werden. Die Stützstege (27) wechseln sich im Hintergriffsabschnitt (20) des Spreizkörpers (10) mit den Hintergriffselementen (31) ab, vgl. Figuren 10 und 11. Die Stützstege (27) sind länger als die Hintergriffselemente (31), so dass sie in der Bohrung (105) der Deckplatte (101) oberhalb der innenliegenden Oberfläche (103) enden. Sie haben zudem eine größere Wandstärke als die Hintergriffselemente (31). Dementsprechend benötigt der Keilkörper (60) Stützstegnuten (76), in denen die Stützstege (27) geführt werden. Die Stützstegnuten (76) ragen in die Zylinderzone (70) hinein und enden dort unterhalb der oberen Stirnfläche (63). Ggf. können die Nuten (76) auch kurz unterhalb der Widerhakenstege (71) enden.

Die Figur 11 zeigt den Dübel mit einem vollständig eingeschobenen Keilkörper (60). Die Stützstege (27) füllen die Stützstegnuten (76) weitgehend aus. Die Hintergriffselemente (31) sind gespreizt.

Die zweite Detaillösung ermöglicht ein zusätzliches Fixieren des Dübels an der unteren Deckplatte (111) mittels Verkleben. Dazu ist im Spreizkörper (10) des Dübels eine Klebstoffpatrone bzw. -ballon (140) angeordnet. Im unteren Ende der Sacklochbohrung (51) sitzt der z.B. kugel- oder fassförmige Klebstoffballon (140). Letzterer besteht aus einer dünnwandigen Membrane (141), die einen Klebstoff (142) austrocknungssicher und dauerhaft umschließt. Ggf. ist die Membrane (141) mit zwei Kammern ausgestattet, so dass sie zwei verschiedene Klebstoffkomponenten getrennt aufbewahren kann.

Nach den Figuren 6 und 7 hat der Boden (52) z.B. acht radiale Nuten (59), die in Bodenmitte von einer axiale Bohrung (58) ausgehend sich bis zur Außenwandung (11) des Spreizkörpers (10) erstrecken. Wird nun der Keilkörper (60) in den Spreizkörper (10) eingedrückt, vgl. Figur 7, wird der Klebstoffballon (140) zwischen den Böden (96) und (52) so zusammengepresst, dass er platzt. Zur gezielten Unterstützung des Platzens kann der Klebstoffballon (140) eine Sollbruchstelle aufweisen. Auch ist es möglich, an einem der Böden (52, 96) ein Aufstech- oder Aufreißwerkzeug anzuordnen. Eine Kombination von Sollbruchstelle und Werkzeug ist ebenfalls denkbar.

Der aus dem Klebstoffballon (140) austretende Klebstoff (142) wird unter der Vorwärtsbewegung des als Kolben wirkenden Keilkörpers (60) durch die Bohrung (58) in die Nuten (59) gepresst. Von dort aus verteilt sich der Klebstoff (142) zwischen dem Boden (52) und der innenliegenden Oberfläche (113) der unteren Deckplatte (111). Der überschüssige Klebstoff (142) ummantelt zusätzlich den unteren Bereich der Außenkontur (11) des Spreizkörpers (10). Durch das Verkleben des Spreizkörpers (10) bzw. Dübels mit der unteren Deckplatte (111) übernimmt letztere einen Teil der auf den Dübel wirkenden Last.

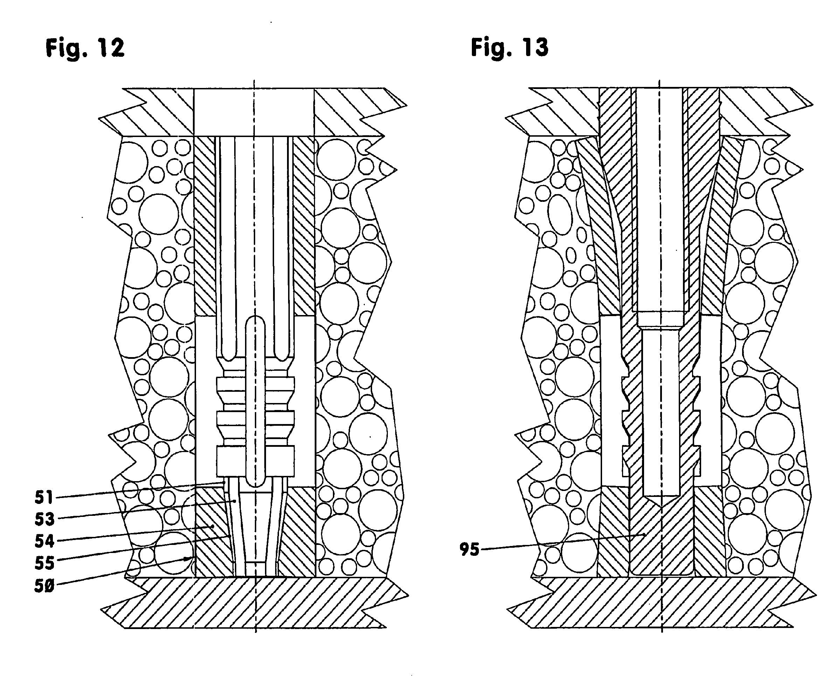

Die Figuren 12 und 13 zeigen eine Variante mit einer zweiten Spreizung. Dazu wird der Fußabschnitt (50) z.B. mit vier Längsschlitzen (53) versehen. Die Längsschlitze (53) haben eine 90°-Teilung und liegen z.B. in der gedachten Verlängerung der Schlitze (29). Sie separieren vier weitere Spreizelemente (54). Letztere klemmen sich bei gesetztem Dübel im unteren Bereich der Stützkernzwischenlage fest. Dies erhöht zusätzlich die Dübelhaltekraft. Dazu geht im Fußabschnitt (50) die zylindrische Bohrung (51) in eine Bohrung mit kegelstumpfmantelförmiger Innenkontur (55) über. Beim Eindrücken des Keilkörpers (10) spreizt dann dort der Fußabschnitt (95) die Spreizelemente (54) nach außen, vgl. Figur 13.

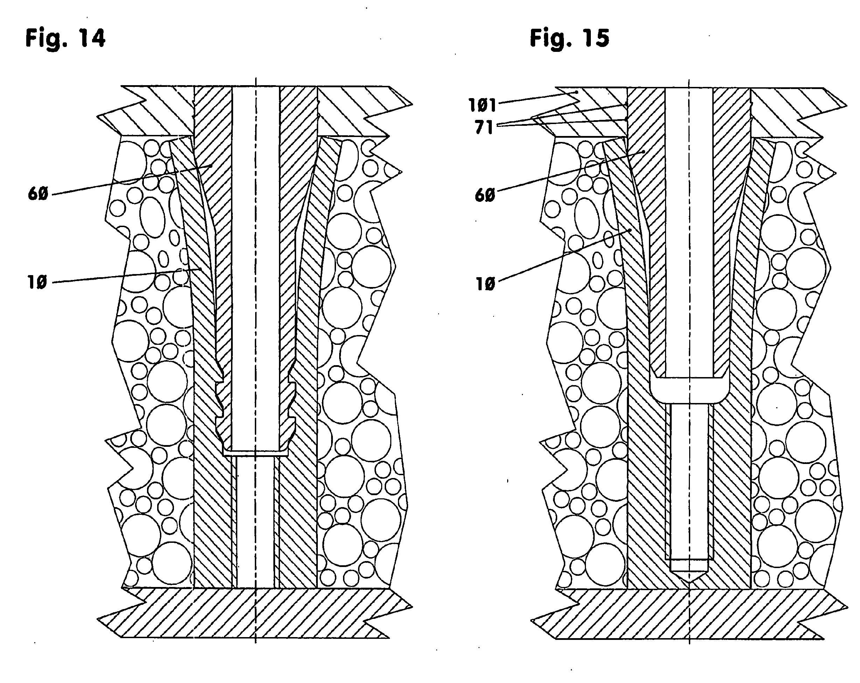

In den Figuren 14 und 15 sind zwei verschiedene Dübel dargestellt, bei denen das Befestigungsmittel nicht im Keilkörper (60), sondern in den Spreizkörper (10) eingeschraubt wird. Nach Figur 14 ist der Keilkörper im Spreizkörper unlösbar verrastet.

Beim Dübel nach Figur 15 wird auf eine Verrastung verzichtet. Der Keilkörper (60) wird u.a. durch die Widerhakenstege (71), vgl. auch Figur 9, in der Deckplatte (101) gehalten.

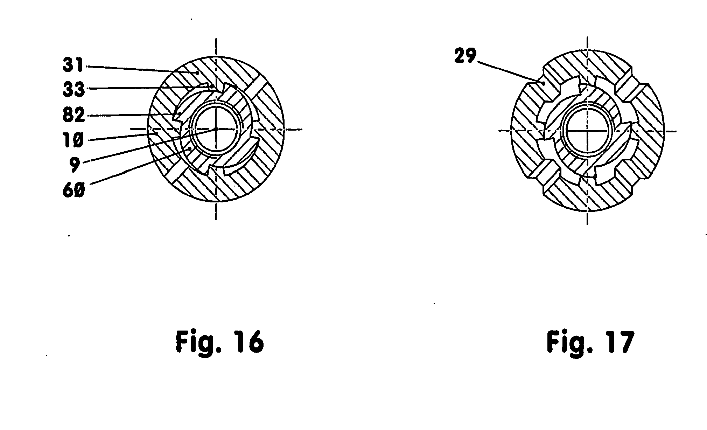

Die Figuren 16 und 17 zeigen einen Querschnitt eines Dübels, bei dem der Keilkörper (60) schon vor dem Dübeleinbau im Spreizkörper (10) angeordnet ist. Der Dübel wird somit vormontiert in die Bohrung (130) eingesetzt, vgl. Figur 4. Die Keilzonen des Keilkörpers (60) sind hier z.B. vier Exzenterelemente (82), die durch ein Verdrehen - um die Längsachse (9) des Dübels - die Hintergriffselemente (31) und ggf. auch die Spreizelemente (54) des Spreizkörpers (10) ausspreizen. Die Exzenterelemente (82) gleiten hierbei an Nocken (33) entlang, die an die Hintergriffselemente (31) angeformt sind.

Die Verdrehbewegung des Keilkörpers (60) im Spreizkörper (10) kann z.B. durch Rastelemente oder Anschläge begrenzt und/oder arretiert werden. In den Figuren 16 und 17 liegen die Rastelemente und/oder Anschläge in einer anderen - hier nicht sichtbaren - Schnittebene.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen zumindest abschnittsweise langlochförmigen oder ovalen Querschnitt hat.

### Bezugszeichenliste:

| | |
|---|---|
| 9 | Mittellinie des Dübels |
| | |
| | |
| 10 | Spreizkörper |
| 11 | Außenwandung, zylindrisch, Kontur |
| | |
| 20 | Hintergriffsabschnitt |
| 21 | Innenwandung, Bohrung |
| 22 | Stirnfläche |
| 23 | Außenkante |
| 24 | Rand |
| 25 | Randsegmente |
| 26 | Einkerbung |
| 27 | Stützstege |
| 29 | Längsschlitze |
| | |
| 31 | Hintergriffselemente, Spreizelemente |
| 32 | Hintergriffsflankenabschnitte |
| 33 | Nocken |
| | |
| 40 | Verrastungszone |
| 41 | Raststollen |
| 42 | Rastausnehmungen, Rastkerben |
| 43 | Rastflanken |
| 44 | Gleitflanken |
| 45 | Nutgrund |
| 49 | Entlastungsschlitze |
| | |
| 50 | Fußabschnitt |
| 51 | Sacklochbohrung, Kammer |
| 52 | Boden |
| 53 | Längsschlitze |
| 54 | Spreizelemente |
| 55 | Bohrung, kegelmantelförmig |
| 58 | Bohrung, axial; Ausnehmung |
| 59 | Nuten, radial |
| | |
| | |
| 60 | Keilkörper |
| 61 | Bohrung |
| 62 | Innengewinde |
| 63 | Stirnfläche, oben |
| | |
| 70 | Sitzabschnitt, Zylinderzone |
| 71 | Widerhakenstege, Umlaufstege, Oberflächenstruktur |
| 72 | Stützflanke |
| 73 | Rutschflanke |
| 74 | Längsstege, Oberflächenstruktur |
| 76 | Stützstegnuten |
| | |
| 80 | Spreizabschnitt, Keilzone |
| 82 | Exzenterelemente |
| 85 | Zwischenabschnitt |
| | |
| 90 | Verrastungszone |
| 91 | Raststollen |
| 92 | Rastausnehmungen, Rastnuten |
| 93 | Stützflanke, eben |
| 94 | Gleitflanke |
| | |
| 95 | Fußabschnitt, kolbenartiges Ende |
| 96 | Boden |
| | |
| | |
| 100 | Sandwichplatte, Leichtkern-Verbundplatte; flächiges Bauteil in Stützkernbauweise |
| 101 | Deckplatte, oben |
| 102 | außenliegende Oberfläche |
| 103 | innenliegende Oberfläche |
| 105 | Bohrung |
| 106 | Kante, innenliegend |
| | |
| 111 | Deckplatte, unten |
| 113 | innenliegende Oberfläche |
| | |
| 121 | Stützkern, Wabenkern, Schaumstoffkern |
| 125 | Bohrung |
| | |
| 130 | Gesamtbohrung, Ausnehmung |
| | |
| | |
| 140 | Klebstoffpatrone, Klebstoffballon |
| 141 | Membrane |
| 142 | Klebstoff |

## Patentansprüche

1. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121) in eine ersten Ausnehmung (130), die die erste Deckplatte (101) und die Stützkernzwischenlage (121) durchdringt,
- wobei der Dübel mindestens einen Spreizkörper (10) und mindestens einen Keilkörper (60) umfasst,
- wobei der Keilkörper (60) in den Spreizkörper (10) zumindest bereichsweise einsteckbar ist,
- wobei der Keilkörper (60) oder der Spreizkörper (10) eine zweite Ausnehmung zum Einschrauben oder Einschlagen eines Befestigungsmittels hat,
- wobei der Dübel in die erste Ausnehmung (130) setzbar ist,
- wobei der Spreizkörper (10) mindestens zwei spreizbare Hintergriffselemente (31, 54) und mindestens eine Verrastungszone (40) hat,
- wobei der Keilkörper (60) mindestens eine Zylinderzone (70), mindestens eine Keilzone (80) und mindestens eine Verrastungszone (90) aufweist,
- wobei die Zylinderzone (70) in der Bohrung (105) der ersten Deckplatte (101) anlegbar ist,
- wobei die Hintergriffselemente (31) des Spreizkörpers (10) durch die Keilzone (80) hinter der ersten Deckplatte (101) - an dieser anliegend- aufspreizbar sind,
- wobei die Verrastungszonen (40, 90) miteinander verrastet sind und
- wobei das Ende des spreizkörpers (10) an der zweiten Deckplatte (111) anlegbar ist.

2. Dübel gemäß Anspruch 1, **dadurch gekennzeichnet, dass** der Spreizkörper (10) rohrförmig gestaltet ist.

3. Dübel gemäß Anspruch 1, **dadurch gekennzeichnet, dass** der Spreizkörper (10) zur Ausbildung der Hintergriffselemente (31) zumindest bereichsweise längsgeschlitzt ist.

4. Dübel gemäß Anspruch 1, **dadurch gekennzeichnet, dass** die Keilzone (80) des Keilkörpers (60) kreisförmige, quadratische, polygonale oder sternförmige Querschnitte hat.

5. Dübel gemäß Anspruch 1, **dadurch gekennzeichnet, dass** bei gesetztem Dübel eine Zylinderzone (70) des Keilkörpers (60) in der Bohrung (105) der ersten Deckplatte (101) zumindest bereichsweise ohne Spiel anliegt.

6. Dübel gemäß Anspruch 1, **dadurch gekennzeichnet, dass** bei gesetztem Dübel die in der Bohrung (105) sitzende Zylinderzone (70) des Keilkörpers (60) zur Verdrehsicherung des Dübels eine Oberflächenstruktur (71, 74) aufweist.

7. Dübel gemäß Anspruch 1, **dadurch gekennzeichnet, dass** die Verrastungszonen (40, 90) des Spreizkörpers (10) und des Keilkörpers (60) jeweils ein Sägezahnprofil aufweisen.

8. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121) in einer erste Ausnehmung (130), die die erste Deckplatte (101) und die Stützkernzwischenlage (121) durchdringt,
- wobei der Dübel mindestens einen Spreizkörper (10) und mindestens einen Keilkörper (60) umfasst,
- wobei der Keilkörper (60) in den Spreizkörper (10) zumindest bereichsweise einsteckbar ist,
- wobei der Keilkörper (60) oder der Spreizkörper (10) eine zweiten Ausnehmung zum Einschrauben oder Einschlagen eines Befestigungsmittels hat,
- wobei der Dübel in die erste Ausnehmung (130) setzbar ist,
- wobei der Spreizkörper (10) mindestens zwei spreizbare Hintergriffselemente (31, 54) und mindestens eine Verrastungszone (40) hat,
- wobei der Spreizkörper (10) eine Kammer (51) mit eingelegter
- mindestens einen Klebstoff (142) enthaltenden - Klebstoffpatrone (140) und bodenseitiger Austrittsausnehmung (58) hat,
- wobei der Keilkörper (60) mindestens eine Zylinderzone (70), mindestens eine Keilzone (80) und mindestens eine Verrastungszone (90) aufweist,
- wobei die Zylinderzone (70) in der Bohrung (105) der ersten Deckplatte (101) anlegbar ist,
- wobei die Hintergriffselemente (31) des Spreizkörpers (10) durch die Keilzone (80) hinter der ersten Deckplatte (101) - an dieser anliegend - aufspreizbar sind,
- wobei die Verrastungszonen (40, 90) miteinander verrastet sind,
- wobei das Ende des Spreizkörpers (10) an der zweiten Deckplatte (111) anlegbar ist, und
- wobei der Klebstoff (142) der geöffneten Klebstoffpatrone (140) in der Montagefuge zwischen der unteren Deckplatte (111) und dem bodenseitigen Ende (52) des Spreizkörpers (10) verteilbar ist.

9. Dübel gemäß Anspruch 8, **dadurch gekennzeichnet, dass** das bodenseitige Ende (52) des Spreizkörpers (10) Nuten (59) zur Verteilung des Klebstoffes (142) aufweist.

## Claims

1. An anchor (dowel) adapted to be secured in planar components (100), said planar components made in a supporting-core-type construction comprising a first cover panel (101), a second cover panel (111) and at least one intermediate supporting-core layer (121) and said anchor adapted to be inserted in a first opening (130) in said component extending through first cover panel (101) and supporting-core intermediate layer (121), wherein
- the anchor comprises at least one spreader body (10) and at least one wedge body (60),
- wedge body (60) is adapted to be inserted at least along parts thereof into spreader body (10),
- wedge body (60) or spreader body (10) has a second opening for the insertion therein of fastening means by screwing or striking it in,
- the anchor is adapted to be set into first opening (130),
- spreader body (10) has at least two engage-behind elements (31, 54) and at least one locking zone (40),
- wedge body (60) has at least one cylinder zone (70), at least one wedge zone (80) and at least one locking zone (90),
- cylinder zone (70) is adapted to internally engage bore (105) of first cover panel (101),
- wedge zone (80) spreads engage-behind elements (31) of spreader body (10) apart outwardly behind first cover panel (101) to engage the latter,
- locking zones (40, 90) engage, and are interlocked with, each other, and
- the end of spreader body (10) is adapted to engage second cover panel (111).

2. Anchor as claimed in claim 1, **characterized in that** spreader body (10) is tubular in shape.

3. Anchor as claimed in claim 1, **characterized in that**, for forming engage-behind elements (31), spreader body (10) has longitudinal slits therethrough at least in parts of the length thereof.

4. Anchor as claimed in claim 1, **characterized in that** wedge zone (80) of wedge body (60) has circular, square, polygonal or star-shaped cross-sections.

5. Anchor as claimed in claim 1, **characterized in that**, when the anchor is set, a cylinder zone (70) of wedge body (60) internally engages bore (105) of first cover panel (101) without clearance at least in parts of the length thereof.

6. Anchor as claimed in claim 1, **characterized in that** cylinder zone (70) of wedge body (60) has structured surface areas (71, 74) to secure the anchor against twisting when the anchor is set in bore (105).

7. Anchor as claimed in claim 1, **characterized in that** locking zones (40, 90) of spreader body (10) and of wedge body (60) each have a sawtooth profile.

8. An anchor (dowel) adapted to be secured in planar components (100), said planar components made in a supporting-core-type construction comprising a first cover panel (101) and a second cover panel (111) and at least one intermediate supporting-core layer (121) and said anchor to be inserted in a first opening (130) in said component which extends through first cover panel (101) and supporting-core intermediate layer (121), wherein
- the anchor comprises at least one spreader body (10) and at least one wedge body (60),
- wedge body (60) is adapted to be inserted at least along parts thereof into spreader body (10),
- wedge body (60) or spreader body (10) has a second opening for the insertion therein of fastening means by screwing or striking it in,
- the anchor is adapted to be set into first opening (130),
- spreader body (10) has at least two engage-behind elements (31, 54) and at least one locking zone (40),
- spreader body (10) has a chamber (51) with an adhesive cartridge (140) containing at least one adhesive material (142) and a discharge opening (58) adjacent the bottom thereof,
- wedge body (60) has at least one cylinder zone (70), at least one wedge zone (80) and at least one locking zone (90),
- cylinder zone (70) is adapted to internally engage bore (105) of first cover panel (101),
- wedge zone (80) spreads engage-behind elements (31) of spreader body (10) apart outwardly behind first cover panel (101) to engage the latter,
- locking zones (40, 90) engage, and are interlocked with, each other,
- the end of spreader body (10) is adapted to engage second cover panel (111), and
- adhesive material (142) of adhesive cartridge (140), when the later is opened, is distributable in the space remaining between bottom cover panel (111) and the bottom end (52) of spreader body (10).

9. Anchor as claimed in claim 8, **characterized in that** bottom end (52) of spreader body (10) has grooves (59) therein for distributing adhesive material (142).

## Revendications

1. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121) dans une première cavité (130) qui traverse la première plaque de recouvrement (101) et la couche intermédiaire de renforcement (121),
- la cheville comprenant au moins un corps d'expansion (10) et au moins un corps cunéiforme (60),
- le corps cunéiforme (60) pouvant être inséré au moins partiellement dans le corps d'expansion (10),
- le corps cunéiforme (60) ou le corps d'expansion (10) présentant une deuxième cavité pour la mise en place d'un moyen de fixation par percussion ou par vissage,
- la cheville pouvant être posée dans la première cavité (130),
- le corps d'expansion (10) ayant au moins deux éléments de prise arrière (31, 54) écartables et au moins une zone d'encliquetage (40),
- le corps cunéiforme (60) présentant au moins une zone cylindrique (70), au moins une zone cunéiforme (80) et au moins une zone d'encliquetage (90),
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- les zones d'encliquetage (40, 90) étant encliquetées entre elles et
- l'extrémité du corps expansible (10) pouvant s'appliquer contre la deuxième plaque de recouvrement (111).

2. Cheville selon la revendication 1, **caractérisée en ce que** le corps d'expansion (10) a la forme d'un tube.

3. Cheville selon la revendication 1, **caractérisée en ce que** le corps d'expansion (10) présente des fentes longitudinales, au moins partiellement, pour la formation des éléments de prise arrière (31).

4. Cheville selon la revendication 1, **caractérisée en ce que** la zone cunéiforme (80) du corps cunéiforme (60) a des sections transversales circulaires, quadratiques, polygonales ou en forme d'étoile.

5. Cheville selon la revendication 1, **caractérisée en ce qu'**une zone cylindrique du corps cunéiforme (60), alors que la cheville est posée, s'applique au moins partiellement sans jeu dans la forure (105) de la première plaque de recouvrement (101).

6. Cheville selon la revendication 1, **caractérisée en ce que** la zone cylindrique (70) du corps cunéiforme (60) qui se trouve dans la forure (105), alors que la cheville est posée, présente une structure de surface (71, 74) assurant une sécurité anti-rotation de la cheville.

7. Cheville selon la revendication 1, **caractérisée en ce que** les zones d'encliquetage (40, 90) du corps d'expansion (10) et du corps cunéiforme (60) présentent chacune un profil en dent de scie.

8. Cheville destinée à être fixée sur des éléments plans de construction sandwich (100), composés d'une première plaque de recouvrement (101) et d'une deuxième plaque de recouvrement (111) et au moins d'une couche intermédiaire de renforcement (121) dans une première cavité (130) qui traverse la première plaque de recouvrement (101) et la couche intermédiaire de renforcement (121),
- la cheville comprenant au moins un corps d'expansion (10) et au moins un corps cunéiforme (60),
- le corps cunéiforme (60) pouvant être inséré au moins partiellement dans le corps d'expansion (10),
- le corps cunéiforme (60) ou le corps d'expansion (10) ayant une deuxième cavité pour la mise en place d'un moyen de fixation par percussion ou par vissage,
- la cheville pouvant être posée dans la première cavité (130),
- le corps d'expansion (10) ayant au moins deux éléments de prise arrière (31, 54) écartables et au moins une zone d'encliquetage (40),
- le corps d'expansion (10) présentant une chambre (51) avec une cartouche d'adhésif insérée (140) qui contient au moins une substance adhésive (142) et qui a un orifice de sortie (58) côté fond,
- le corps cunéiforme (60) présentant au moins une zone cylindrique (70), au moins une zone cunéiforme (80) et au moins une zone d'encliquetage (90),
- la zone cylindrique (70) pouvant s'appliquer dans la forure (105) de la première plaque de recouvrement (101),
- les éléments de prise arrière (31) du corps d'expansion (10) pouvant être écartés, par le biais de la zone cunéiforme (80), derrière la première plaque de recouvrement (101) sur laquelle ils s'appliquent,
- les zones d'encliquetage (40, 90) étant encliquetées entre elles et
- l'extrémité du corps expansible (10) pouvant s'appliquer contre la deuxième plaque de recouvrement (111) et
- la substance adhésive (142) de la cartouche d'adhésif ouverte (140) pouvant être répartie dans le joint de montage entre la plaque de recouvrement inférieure (111) et l'extrémité côté fond (52) du corps d'expansion (10).

9. Cheville selon la revendication 8, **caractérisée en ce que** l'extrémité côté fond (52) du corps d'expansion (10) présente des rainures (59) pour la répartition de la substance adhésive (142).
